# EUROPÄISCHE PATENTSCHRIFT

(11) **EP 0 804 534 B1**
(45) Veröffentlichungstag und Bekanntmachung des Hinweises auf die Patenterteilung: **17.03.1999**
(21) Anmeldenummer: 96900569.3
(22) Anmeldetag: 08.01.1996
(51) Int. Cl.: C11D 3/39, C11D 3/386

(54) **ENZYMHALTIGES BLEICHENDES WASCHMITTEL**
ENZYME-CONTAINING BLEACHING WASHING AGENT
DETERGENT DE BLANCHIMENT CONTENANT UNE ENZYME

(30) Priorität: 17.01.1995 DE 19501120
(43) Veröffentlichungstag der Anmeldung: 05.11.1997
(73) Patentinhaber: Henkel Kommanditgesellschaft auf Aktien, 40191 Düsseldorf (DE)
(72) Erfinder: BLOCK, Christian, D-50733 Köln (DE); BEAUJEAN, Hans-Josef, D-41539 Dormagen (DE); BÖCKER, Monika, D-42799 Leichlingen (DE)
(86) Internationale Anmeldenummer: EP9600043
(87) Internationale Veröffentlichungsnummer: WO9622354

(56) Entgegenhaltungen:
- EP-A- 0 415 652
- EP-A- 0 628 625
- DE-A- 3 321 082
- GB-A- 2 085 937
- US-A- 4 421 664
- CHEMICAL ABSTRACTS, vol. 102, no. 14, 8.April 1985 Columbus, Ohio, US; abstract no. 115557, Seite 117; XP002002926 & JP,A,59 204 697 (KAO CORP.) 20.November 1984
- DATABASE WPI Section Ch, Week 8212 Derwent Publications Ltd., London, GB; Class D25, AN 82-23235E XP002002927 & JP,A,57 028 197 (KAO SOAP KK) , 15.Februar 1982
- DATABASE WPI Section Ch, Week 8436 Derwent Publications Ltd., London, GB; Class D25, AN 84-221873 XP002002928 & JP,A,59 129 300 (LION CORP) , 25.Juli 1984

## Beschreibung

Die im folgenden beschriebene Erfindung liegt auf dem Gebiet der festen streufähigen Waschmittel, wie sie für die Textilwäsche im Haushalt und im Gewerbe verwendet werden. Sie betrifft dabei solche Waschmittel, die einerseits ein Enzym und andererseits als bleichende Komponente Natriumpercarbonat enthalten.

Der Einsatz von Enzymen in pulverförmigen Waschmitteln hat eine lange Tradition. Kaum eines der heute üblichen Universalwaschmittel verzichtet auf den Einsatz von Enzymen, da mit deren Hilfe die Entfernung verschiedener Schmutzbestandteile von Textilien auch bei niedrigen Temperaturen schnell und schonend erreicht werden kann. Besonders weit verbreitet ist der Einsatz von Proteasen zur Entfernung von eiweißhaltigen Verschmutzungen, doch kommen zunehmend auch andere Enzyme, wie Lipasen, Amylasen, Cellulasen und Cutinasen in Gebrauch, denen jeweils andere spezifische Aufgaben zugeordnet sind.

Neben zahlreichen weiteren Bestandteilen enthalten Universalwaschmittel in der Regel auch Bleichmittel zur Entfernung bleichbarer Schmutzbestandteile. Ganz überwiegend wird für diese Zwecke Natriumperborat in Form des Tetrahydrats eingesetzt, das eine außerordentlich hohe Lagerstabilität auch in Gegenwart leicht oxydabler Waschmittelbestandteile aufweist. Beim Auflösen des Waschmittels in Wasser löst sich Natriumperborat verhältnismäßig langsam auf, was aber in vielen Fällen ohne Bedeutung ist, da die eigentliche Bleichwirkung erst einsetzt, wenn die Waschlauge aufgeheizt wird.

In jüngerer Zeit wird anstelle von Natriumperborat vielfach der Einsatz von Natriumpercarbonat als Bleichmittel vorgeschlagen, um ökologischen Bedenken gegen die Verbreitung von Borverbindungen entgegenzukommen. Der Einsatz von Natriumpercarbonat in Waschmitteln bietet allerdings gewisse Schwierigkeiten, die in erster Line von der geringen Lagerstabilität des Natriumpercarbonats in feuchter Atmosphäre und in Gegenwart von Schwermetallionen herrühren. Bei enzymhaltigen Waschmitteln wirkt sich darüber hinaus die gute Löslichkeit des Natriumpercarbonats, die oft als Vorteil ausgelobt wird, auch als Nachteil aus, da in der Waschlauge bereits von Anfang an hohe Konzentrationen an Aktivsauerstoff zur Verfügung stehen, die die Wirkung einer Reihe von Enzymen beeinträchtigen können. Insbesondere die Wirkung von Proteasen gegenüber eiweißhaltigen Anschmutzungen kann durch hohe Gehalte an Aktivsauerstoff beeinträchtigt werden. Eine abschließende Lösung dieser Probleme ist bis heute noch nicht gefunden worden. Als ältere Veröffentlichungen, die die Einarbeitung von Natriumpercarbonat in pulverförmige enzymhaltige Waschmittel beschreiben, seien an dieser Stelle beispielhaft nur die europäischen Patentanmeldungen 451 893 und 567 140 sowie die internationale Patentanmeldung WO 92/6163 genannt.

Der vorliegenden Erfindung lag die Aufgabe zugrunde, ein verbessertes pulverförmiges enzymhaltiges Waschmittel auf Basis von Natriumpercarbonat als Bleichmittel zu schaffen. Eine besondere Bedeutung kam dabei einerseits der Stabilität des Natriumpercarbonats, andereseits aber der möglichst unbeeinträchtigten Enzymwirkung zu.

Es wurde jetzt gefunden, daß mit dem nachfolgend beschriebenen Mittel nicht nur bei den angesprochenen Problemen eine wesentliche Verbesserung zu erreichen ist.

Gegenstand der Erfindung ist ein Waschmittel in streufähiger Form, das neben Tensid und Buildersubstanz wenigstens ein Enzym und Natriumpercarbonat enthält und das dadurch gekennzeichnet ist, daß das Natriumpercarbonat in einer Form enthalten ist, die sich beim Auflösen in Wasser langsamer löst als das Waschmittel insgesamt, wobei das Natriumpercarbonat nicht mit einem ein Borat enthaltenden Beschichtungsmittel oder alleine mit Borsäure oder alleine mit Natriumsilikat oder alleine mit Magnetsiumsulfat beschichtet ist. Besonders bevorzugt werden solche Waschmittel, bei denen unter Standardbedingungen nach 1,0 Minuten jeweils mehr als 80 Gew.-% des Waschmittels, aber weniger als 70 Gew.-% des Natriumpercarbonats in Lösung gehen.

Das neue Waschmittel zeichnet sich gegenüber vorbekannten Waschmitteln mit gleicher Bruttozusammensetzung dadurch aus, daß die Enzymwirkung zu Beginn des Waschprozesses selbst durch verhältnismäßig hohe Gehalte an Percarbonat im Waschmittel nur wenig beeinträchtigt wird. Wird die geringe Löslichkeit des Natriumpercarbonats durch bestimmte Umhüllungen der Percarbonat-Partikel erreicht, die im folgenden noch näher erläutert werden, so zeichnet sich das neue Waschmittel darüber hinaus durch eine besonders hohe Lagerstabilität auch in feuchter Atmosphäre bei erhöhten Temperaturen aus.

Die erfindungsgemäße Begünstigung der Enzymwirkung ist weitgehend unabhängig davon, wie das Waschmittel im einzelnen aufgebaut und zusammengesetzt ist. So läßt sich die vorteilhafte Wirkung beispielsweise sowohl bei sprühgetrockneten Waschmitteln als auch bei solchen Waschmitteln beobachten, die durch die verschiedensten Methoden der Agglomerationsgranulation hergestellt worden sind. Auch bei Waschmitteln mit hohen bis sehr hohen Schüttgewichten von 500 bis 1400 g/l, wie sie durch Nachverdichtung in schnellaufenden Mischaggregaten oder Extrudern erreicht werden, läßt sich der beschriebene Effekt einstellen. Er ist dann besonders deutlich, wenn sich unter Standardbedingungen nach 1,0 Minuten mehr als 80 Gew.-% des Waschmittels, aber weniger als 70 Gew.-%, vorzugsweise weniger als 50 Gew.-% und insbesondere weniger als 30 Gew.-% des Natriumpercarbonats auflösen.

Im folgenden sollen Zusammensetzung, Aufbau und Herstellung der erfindungsgemäßen Waschmittel im einzelnen erläutert werden.

Die neuen pulverförmigen Waschmittel enthalten als Bestandteile wenigstens ein Tensid, wenigstens eine Buildersubstanz, wenigstens ein Enzym und als Bleichmittel Natriumpercarbonat. Üblicherweise ist Natriumpercarbonat der einzige wesentliche Aktivsauerstoffträger im Waschmittel, doch ist dies keine notwendige Bedingung solange durch die Anwesenheit anderer Aktivsauerstoffträger die Vorteile nicht aufgehoben werden. Neben den genannten Bestandteilen können die Waschmittel weitere übliche Waschmittelinhaltsstoffe enthalten, insbesondere Vergrauungsinhibitoren, Schaumregulatoren, optische Aufheller, textilweichmachende Stoffe, Neutralsalze, Bleichaktivatoren, Duftstoffe und Farbstoffe. In der Mehrzahl der Fälle werden im fertigen Waschmittel die obengenannten Komponenten nicht nebeneinander einzeln vorliegen, sondern zu mehreren gemeinsam in Form von vorgefertigtem Granulat. Dabei können im fertigen Waschmittel auch mehrere Granulate unterschiedlicher Zusammensetzung nebeneinander vorliegen. Natriumpercarbonat wird dabei in der Regel nicht in ein anderes Granulat eingearbeitet, sondern bildet einen eigenen Waschmittelbestandteil.

Natriumpercarbonat (2Na₂CO₃ x 3H₂O₂) kann dem erfindungsgemäßen Waschmittel in feinteiliger kristalliner Form oder aber in Form von größeren Agglomeraten zugesetzt werden. Während bei Percarbonatagglomeraten durch Wahl geeigneter Agglomerierhilfsmittel bereits eine verzögerte Löslichkeit erreicht werden kann, ist es bei feinteiligem kristallinen Material im Normalfall notwendig, durch Aufbringen geeigneter Hüllsulbstanzen die Löslichkeit des Percarbonats zu verzögern. Andererseits soll die Löslichkeit des Natriumpercarbonats aber auch nicht zu stark verringert werden, so daß sich vorzugsweise im oben beschriebenen Standardtest nach 5,0 Minuten wenigstens 90 % des Natriumpercarbonats gelöst haben. Hüllsubstanzen für Natriumpercarbonat sind in großer Zahl sowohl aus dem Bereich der anorganischen wie der organischen Materialien vorgeschlagen worden, jedoch meist mit dem Ziel, die Lagerstabilität des Natriumpercarbonats im ungelösten Zustand zu verbessern. Viele der für diesen Zweck vorgeschlagenen Hüllsubstanzen eignen sich allerdings auch, um gleichzeitig die Lösegeschwindigkeit des Natriumpercarbonats zu verringern. Sofern es damit gelingt, die erfindungsgemäß notwendigen Verhältnisse der Lösungsgeschwindigkeit einzustellen, sind diese Hüllsubstanzen für den hier vorgesehenen Zweck geeignet. Bevorzugt werden Natriumpercarbonatqualitäten, die mit niedrigschmelzenden organischen Substanzen, beispielsweise Wachsen, Fettalkoholen oder Fettsäuren umhüllt sind, beispielsweise Produkte, wie sie in den deutschen Offenlegungsschriften DE 41 09 954, DE 41 29 242 und DE 42 09 924 beschrieben sind. Auch Natriumpercarbonat, das mit polymeren Hüllsubstanzen versehen ist, wie es beispielsweise in der deutschen Offenlegungsschrift DE 41 09 953 beschrieben ist, kann sich für den Einsatz in den erfindungsgemäßen Waschmitteln eignen. Im erfindungsgemäßen Waschmittel wird allerdings Natriumpercarbonat bevorzugt, das in Form größerer Körnchen vorliegt, die durch Agglomerationsgranulation erhalten werden. Diese Granulate bestehen vorzugsweise zu wenigstens 75 Gew.-% und insbesondere wenigstens zu 85 Gew.-% aus Natriumpercarbonat und enthalten daneben üblicherweise nur solche Stoffe, die zur chemischen Stabilisierung des Natriumpercarbonats oder zur mechanischen Stabilisierung des Granulatkorns benötigt werden. Schüttdichte und Korngröße des Natriumpercarbonatgranulats werden vorzugsweise so gewählt, daß sie von Korngröße und Schüttdichte der übrigen Waschmittelbestandteile möglichst wenig abweichen. Vorzugsweise liegt die Schüttdichte dieses Granulats zwischen etwa 500 g/l und etwa 1400 g/l, wobei jedoch Schüttdichten über oder unter diesem Bereich nicht ausgeschlossen sind. Besonders bevorzugt sind Schüttdichten im Bereich von 600 bis 1200 g/l und insbesondere von 700 bis 1000 g/l. Die mittlere Teilchengröße des Natriumpercarbonatsgranulats liegt meist im Bereich von 0,8 bis 6 mm, wobei Bereiche zwischen 1 und 3 mm und insbesondere zwischen 1,2 und 2 mm besonders bevorzugt werden.

Die Herstellung des Natriumpercarbonatsgranulats kann beispielsweise durch Agglomeration von feinteiligem Material in geeigneten Granuliermischern unter Zusatz von Granulationshilfsmitteln erfolgen. Bevorzugt wird aber ein Verfahren, das als Wirbelschicht-Sprühgranulation bezeichnet wird und bei dem eine Wasserstoffperoxid- und eine Natriumcarbonatlösung in einer Wirbelschichtapparatur auf Natriumpercarbonatkeime gesprüht werden und gleichzeitig Wasser verdampft wird. Eine oder beide dieser Lösungen können weiterhin Hilfsstoffe für die Kristallbildung, Füllstoffe oder insbesondere Stabilisatoren für das sich bildende Natriumpercarbonatgranulat enthalten. Eine besonders bevorzugte Ausführungsform dieses Herstellungsverfahrens ist das in der bisher unveröffentlichten deutschen Patentanmeldung P 43 29 205.4 beschriebene Verfahren. Der Offenbarungsgehalt dieser Patentanmeldung wird deshalb insofern ausdrücklich auch zum Inhalt der vorliegenden Patentanmeldung gemacht. Bei diesem Verfahren werden eine wäßrige Wasserstoffperoxidlösung und eine wäßrige Natriumcarbonatlösung mit Hilfe einer einzigen Düse in die Wirbelschicht gesprüht, wobei gleichzeitig Wasser im Bereich von 40 bis 95 °C verdampft wird.

Besonders bevorzugt werden Wirbelschichtsprühgranulationsverfahren, bei denen gleichzeitig eine Klassierung der gebildeten Granulatkörner in der Weise stattfindet, daß nur Granulatkörner der gewünschten Größe ausgetragen werden und Überkorn praktisch nicht gebildet wird. Diese klassierenden Verfahren, wie sie beispielsweise in den europäischen Patentanmeldungen 163 836 und 332 929 geschildert werden, ermöglichen es, gezielt bestimmte Korngrößen bei gleichzeitig enger Korngrößenverteilung ohne einen nachfolgenden Klassierungsschritt herzustellen. Im einfachsten Fall kann die Größenklassierung in der Wirbelschicht beispielsweise mittels einer Siebvorrichtung oder durch einen entgegengeführten Luftstrom (Sichterluft) erfolgen, der so reguliert wird, das erst Teilchen ab einer bestimmten Teilchengröße aus der Wirbelschicht entfernt und kleinere Teilchen in der Wirbelschicht zurückgehalten werden. Geeignete Wirbelschichtanlagen werden beispielsweise von der Firma Glatt als Anlage zur Granuliertrocknung vertrieben.

Das so hergestellte Granulat aus Natriumpercarbonat kann als solches im erfindungsgemäßen Waschmittel eingesetzt werden, wenn es die obengenannten Spezifikationen zur Löslichkeit erfüllt. Doch ist es auch möglich und vielfach auch vorteilhaft, das so vorgebildete Granulat in derselben Wirbelschichtanlage oder in einem nachfolgenden Schritt mit geeigneten Hüllsubstanzen zu beschichten. Geeignet sind organische Hüllsubstanzen, die aus Lösungen oder als Schmelze aufgebracht werden können; bevorzugt werden aber anorganische Hüllsubstanzen, insbesondere Alkalicarbonate, Alkalisilikate und Magnesiumsalze, wobei Natriumsilikat und Magnesiumsulfat ausgenommen sind. Ebenfalls ausgenommen sind Borate, da ja gerade durch den Einsatz des Natriumpercarbonats die Verwendung von Boraten in den Waschmitteln vermieden werden soll. Die Hüllsubstanzen können in üblichen Mischgranulationsgeräten auf das vorgebildete Percarbonatgranulat aufgebracht werden; erfindungsgemäß wird aber die Umhüllung in der Wirbelschicht bevorzugt. Sofern mehrere Hüllverbindungen verwendet werden, können diese in einer, aber auch in mehreren Schichten getrennt aufgebracht werden. Besonders bevorzugt werden für die erfindungsgemäßen Waschmittel umhüllte Natriumpercarbonatpartikel, wie sie nach dem Verfahren der bisher unveröffentlichten deutschen Patentanmeldung P 43 24 104.2 gewonnen werden. Die Offenbarung dieser Patentanmeldung wird deshalb insoweit ausdrücklich auch zum Inhalt der vorliegenden Patentanmeldung gemacht. Das dort geschilderte Verfahren zeichnet sich dadurch aus, daß als Hüllverbindung sowohl Natriumcarbonat als auch Natriumsilikat und eines oder mehrere Magnesiumsalze aus der Gruppe Magnesiumsulfat, Magnesiumchlorid und Magnesiumcarbonat in einer einzigen oder in getrennten Schichten zur Umhüllung verwendet werden. Jedoch sind gemäß der vorliegenden Patentanmeldung Beschichtungen alleine mit Natriumsilikat oder alleine mit Magnesiumsulfat ausgenommen. Vorzugsweise werden 0,5 - 25 Gew.-% und insbesondere 1 - 15 Gew.-% dieser Hüllsubstanzen, bezogen auf das fertige umhüllte Granulat in getrennten Schichten aufgebracht. Wird ein so umhülltes Natriumpercarbonat-Granulat, das außerdem die obengenannten Spezifikationen hinsichtlich Schüttdichte und Teilchengröße aufweist, im erfindungsgemäßen Waschmittel verwendet, so resultiert überraschend große chemische Beständigkeit.

Der Gehalt an Natriumpercarbonat liegt im erfindungsgemäßen Waschmittel meist zwischen 5 und 50 Gew.-%, vorzugsweise 10 Gew.-% bis 40 Gew.-% und insbesondere 15 Gew.-% bis 25 Gew.-%, jeweils ohne Hilfs- und Zusatzstoffe gerechnet.

Der zweite wesentliche Bestandteil des erfindungsgemäßen Waschmittels ist ein Tensid, wobei dieses Tensid aus allen in Waschmitteln üblichen Tensidklassen ausgewählt sein kann, d.h. es kann ein anionisches, nichtionisches, zwitterionisches oder kationisches Tensid sein. Selbstverständlich können auch Gemische von zwei oder mehr Tensiden aus einer oder mehreren dieser Klassen Verwendung finden. Bevorzugt werden allerdings anionische und nichtionische Tenside und Gemische aus Tensiden dieser beiden Klassen eingesetzt. Der Tensidgehalt im Waschmittel liegt vorzugsweise zwischen etwa 5 Gew.-% und etwa 30 Gew.-%, insbesondere zwischen etwa 10 Gew.-% und etwa 25 Gew.-%.

Als anionische Tenside eignen sich beispielsweise solche vom Typ der Sulfonate und Sulfate. Als Tenside vom Sulfonattyp kommen Alkylbenzolsulfonate (C₉-C₁₅-Alkyl) und Olefinsulfonate, d.h. Gemische aus Alken- und Hydroxyalkansulfonaten sowie Disulfonaten, wie man sie beispielsweise aus C₁₂-C₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch Alkansulfonate, die aus C₁₂-C₁₈-Alkanen durch Sulfochlorierung oder Sulfoxidation und anschließende Hydrolyse bzw. Neutralisation durch Bisulfitaddition an Olefine erhältlich sind, sowie die Ester von α-Sulfofettsäuren (Estersulfonate), z.B. die α-sulfonierten Methylester der hydrierten Kokos-, Palmkern- oder Talgfettsäuren, sowie die Sulfobernsteinsäureester.

Geeignete Tenside vom Sulfattyp sind die Schwefelsäuremonoester aus primären Alkoholen natürlichen und synthetischen Ursprungs, d.h. aus Fettalkoholen, z.B. Kokosfettalkoholen, Talgfettalkoholen, Oleylalkohol, Lauryl-, Myristyl-, Palmityl- oder Stearylalkohol, oder den C₁₀-C₂₀-Oxoalkoholen, und diejenigen sekundärer Alkohole dieser Kettenlänge. Auch die Schwefelsäuremonoester der mit 1 bis 6 Mol Ethylenoxid ethoxylierten langkettigen primären und sekundären Alkohole (Ethersulfate) sind geeignet. Ebenso eignen sich sulfatierte Fettsäuremonoglyceride.

Ferner sind z.B. Seifen aus natürlichen oder synthetischen, vorzugsweise gesättigten Fettsäuren brauchbar. Geeignet sind insbesondere aus natürlichen Fettsäuren, z.B. Kokos-, Palmkern- oder Talgfettsäuren abgeleitete Seifengemische. Bevorzugt sind solche, die zu 50 bis 100 % aus gesättigten C₁₂₋C₁₈-Fettsäureseifen und zu 0 bis 50 % aus Ölsäureseife zusammengesetzt sind.

Die anionischen Tenside können in Form ihrer Natrium-, Kalium- und Ammoniumsalze sowie als lösliche Salze organischer Basen, wie Mono-, Di- oder Triethanolamin vorliegen. Vorzugsweise werden die Natriumsalze eingesetzt.

Als nichtionische Tenside sind vor allem die Anlagerungsprodukte von 1 bis 40, vorzugsweise 2 bis 20 Mol Ethylenoxid an 1 Mol einer langkettigen aliphatischen Verbindung mit im wesentlichen 10 bis 20 Kohlenstoffatomen aus der Gruppe der Alkohole, Carbonsäuren, Fettamine, Carbonsäureamide oder Alkansulfonamide für die erfindungsgemäßen Waschmittel brauchbar. Besonders wichtig sind die Anlagerungsprodukte von 8 bis 20 Mol Ethylenoxid an primäre Alkohole, wie z.B. an Kokos- oder Talgfettalkohole, an Oleylalkohol, an Oxoalkohole, oder an sekundäure Alkohole mit 8 bis 18, vorzugsweise 12 bis 18 C-Atomen.

Neben den wasserlöslichen Nonionics sind aber auch nicht bzw. nicht vollständig wasserlösliche Polyglykolether mit 2 bis 7 Ethylenglykoletherresten im Molekül von Interesse, insbesondere, wenn sie zusammen mit wasserlöslichen, nichtionischen oder anionischen Tensiden eingesetzt werden.

Als nichtionische Tenside können auch Alkylglykoside der allgemeinen Formel R-O-(G)ₓ eingesetzt werden, in der R einen primären geradkettigen oder in 2-Stellung mehtylverzweigten aliphatischen Rest mit 8 bis 22, vorzugsweise 12 bis 18 C-Atomen bedeutet, G ein Symbol ist, das für eine Glykose-Einheit mit 5 oder 6 C-Atomen steht, und der Oligomerisierungsgrad x zwischen 1 und 10 liegt.

Als dritte wesentliche Komponente enthält das erfindungsgemäße Waschmittel wenigstens eine Buildersubstanz, auch als Gerüstsubstanz bezeichnet. Unter Buildersubstanzen versteht man heute im engeren Sinne schwach sauer, neutral oder alkalisch reagierende lösliche und/oder unlösliche Verbindungen, die die Eigenschaft haben, Calcium und gegebenenfalls Magnesiumionen auszufällen oder komplex zu binden. Bevorzugt werden hier, wie auch bei den Tensiden, die ökologisch unbedenklichen Verbindungen. Vorzugsweise liegt der Gehalt an Buildersubstanzen im Waschmittel zwischen etwa 10 Gew.-% und etwa 50 Gew.-%, insbesondere zwischen etwa 15 Gew.-% und etwa 45 Gew.-%, gerechnet als wasserfreie Substanz.

Als Builder eignen sich in erster Linie die feinkristallinen synthetischen wasserhaltigen Zeolithe, insbesondere die Zeolithe der Typen A und P, die bei der Produktion des Granulats gegebenenfalls auch in Form einer wasserhaltigen Paste, wie sie bei der Herstellung des Zeoliths anfällt, eingesetzt werden können. Ansonsten kann sprühgetrocknetes Pulver, das gegebenenfalls Hilfs- und Zusatzstoffe enthalten kann und üblicherweise zwischen etwa 20 und 22 Gew.-% an fester gebundenem Wasser enthält, eingesetzt werden.

Als weitere Builderbestandteile, die insbesondere zusammen mit den Zeolithen eingesetzt werden können, kommen (co-)polymere Polycarboxylate in Betracht, wie Polyacrylate, Polymethacrylate und insbesondere Copolymere der Acrylsäure mit Maleinsäure, vorzugsweise solche mit 50 % bis 10 % Maleinsäure. Das Molekulargewicht der Homopolymeren liegt im allgemeinen zwischen 1 000 und 100 000, das der Copolymeren zwischen 2 000 und 200 000, vorzugsweise 50 000 bis 120 000, bezogen auf freie Säure. Ein besonders bevorzugtes Acrylsäure-Maleinsäure-Copolymer weist ein Molekulargewicht von 50 000 bis 100 000 auf. Besonders bevorzugt werden auch Terpolymere, die aus Acrylsäure, Maleinsäure und Vinylacetat mit nachfolgender Verseifung erhältlich sind. Geeignete, wenn auch weniger bevorzugte Verbindungen dieser Klasse sind Copolymere der Acrylsäure oder Methacrylsäure mit Vinylethern, wie Vinylmethylether, in denen der Anteil der Säure mindestens 50 % beträgt. Brauchbar sind ferner Polyacetalcarbonsäuren, wie sie beispielsweise in den US-Patentschriften 4,144,226 und 4,146,495 beschrieben sind, sowie polymere Säuren, die durch Polymerisation von Acrolein und anschließende Disproportionierung mittels Alkalien erhalten werden und aus Acrylsäureeinheiten und Vinylalkoholeinheiten bzw. Acroleinheiten aufgebaut sind.

Brauchbare niedermolekulare organische Gerüstsubstanzen sind beispielsweise die bevorzugt in Form ihrer Natriumsalze eingesetzten Polycarbonsäuren, wie Citronensäure und Nitrilotriessigsäure (NTA), sofern ein derartiger Einsatz aus ökologischen Gründen nicht zu beanstanden ist.

In Fällen, in denen ein Phosphatgehalt toleriert wird, können auch Phosphate als Buildersubstanzen verwendet werden, insbesondere Pentanatriumtriphosphat, gegebenenfalls auch Pyrophosphate sowie Ortophosphate, die in erster Linie als Fällungsmittel für Wasserhärte wirken.

Geeignete anorganische, nicht komplexbildende Salze sind die - auch als "Waschalkalien" bezeichneten - Bicarbonate, Carbonate, Borate oder Silikate der Alkalien. Von den Alkalisilikaten sind vor allem die Natriumsilikate mit einem Verhältnis Na₂O : SiO₂ wie 1 : 1 bis 1 : 3,5 sowie die kristallinen Natriumdisilikate mit Schichtstruktur zu erwähnen.

Der vierte wesentliche Bestandteil im erfindungsgemäßen Waschmittel ist ein Enzym. Dieses Enzym kann ausgewählt sein aus den Klassen der Proteasen, der Lipasen, der Amylasen, der Cellulasen und der Cutinasen, wobei auch Gemische von mehreren Enzymen, die aus mehreren dieser Klassen stammen können, brauchbar sind. Besonders vorteilhafte Effekte weisen die erfindungsgemäßen Waschmittel dann auf, wenn sie ein Enzym aus der Gruppe der Proteasen enthalten. Die Wirkung dieser Enzyme wird in besonderem Maße durch zu hohe Konzentrationen an Aktivsauerstoff in der Lösung beeinträchtigt. Insbesondere die Entfernung von Blutanschmutzungen durch die Proteasen wird in Gegenwart von hohen Aktivsauerstoffgehalten empfindlich gestört. Gerade bei der Entfernung dieser Anschmutzung besitzen daher die erfindungsgemäßen Waschmittel ihre ganz besonderen Stärken. Die Vorteile der erfindungsgemäßen Waschmittel zeigen sich unabhängig davon, ob neutrale, alkalische oder hochalkalische Proteasen eingesetzt werden. Hochalkalische Proteasen werden allerdings wegen ihres insgesamt besseren Wirkungsspektrums im alkalischen Bereich in den erfindungsgemäßen Waschmitteln bevorzugt eingesetzt. Die im Waschmittel enthaltenen Enzyme werden vorzugsweise jedes für sich oder auch gemeinsam meist getrennt von den übrigen Waschmittelbestandteilen in Form eigener Granulate verwendet. Der Aufbau dieser Granulate wird vorzugsweise so gewählt, daß die Granulate in Wasser schnell zerfallen und die Enzyme freisetzen. Der Zerfall der Enzymgranulate soll mindestens so schnell erfolgen, wie die Auflösung des Waschmittels insgesamt. Der Gehalt an Enzym im erfindungsgemäßen Waschmittel liegt vorzugsweise zwischen etwa 0,1 Gew.-% und etwa 3 Gew.-%, insbesondere 0,5 Gew.-% bis 2 Gew.-%, gerechnet als Enzymgranulat. Selbstverständlich hängt die Menge im einzelnen von der spezifischen Wirksamkeit des jeweiligen Enzyms ab, so daß von schwach wirksamen Enzymen entsprechend mehr genommen werden muß als von stark wirksamen.

Neben Tensid, Buildersubstanz, Natriumpercarbonat und Enzym kann das erfindungsgemäße Waschmittel weitere übliche Waschmittelinhaltsstoffe, insbesondere Vergrauungsinhibitoren, Schaumregulatoren, optische Aufheller, textilweichmachende Stoffe, Neutralsalze, Bleichaktivatoren, Duftstoffe und Farbstoffe enthalten. Bevorzugt werden Bleichaktivatoren, Schauminhibitoren oder Vergrauungsinhibitoren als eigene Granulate verwendet.

Als Vergrauungsinhibitoren eignen sich für die erfindungsgemäßen Waschmittel vorzugsweise Carboxymethylcellulose, Methylcellulose, Methylhydroxyethylcellulose und Gemische dieser Verbindungen. Brauchbar sind beispielsweise auch Polymere des Vinylpyrrolidons und hydrophile Polyamide und Polyester.

Als Schaumregulatoren werden in den erfindungsgemäßen Waschmitteln vorzugsweise Seifen mit einem hohen Anteil an C₁₈-C₂₄-Fettsäuren, Organopolysiloxane, Paraffine und langkettige amidische Verbindungen verwendet, wobei es vorteilhaft ist, Gemische verschiedener Regulatoren einzusetzen.

Als Bleichaktivatoren, die der Verstärkung der Bleichwirkung bei niedrigen Temperaturen dienen, eignen sich in erster Linie organische N-Acyl- bzw. O-Acylverbindungen, die in der Lage sind, in der wäßrigen Waschflotte mit Wasserstoffperoxid organische Persäuren zu bilden. Hier seien als Beispiele nur N,N,N',N'-Tetraacetylethylendiamin und Glukosepentaacetat genannt.

Bei den optischen Aufhellern handelt es sich meist um Derivate der Diaminostilbendisulfonsäure bzw. deren Alkalimetallsalze, sowie um substituierte 4,4'-Distyryl-diphenyle.

Weiterhin sind Stabilisatoren, insbesondere für Bleichmittel und Enzyme zu erwähnen, wobei in erster Linie die Salze von Polyphosphonsäuren, beispielsweise 1-Hydroxyethan-1,1-diphosphonsäure und Diethylentriamin-pentamethylenphosphonsäure zu nennen sind.

Die Herstellung des Waschmittels kann auf verschiedene Art erfolgen und ist an kein bestimmtes Verfahren gebunden, solange die obengenannten Löslichkeitsbedingungen eingehalten werden. Dabei kann das Löseverhalten einerseits durchVerzögerung der Auflösung des Percarbonats, aber auch durch Maßnahmen, die die Auflösung der übrigen Waschmittelbestandteile, insbesondere der Enzyme, beschleunigt erreicht werden. Üblicherweise werden der überwiegende Teil der Buildersubstanz und der Tenside zusammen mit dem größten Teil der übrigen Bestandteile zu einem eigenen Granulat verarbeitet, dem dann Enzym und Percarbonat jeweils in Form eigener Granulate zugemischt werden. Ebensogut ist es aber auch möglich, einzelne oder mehrere Bestandteile des Waschmittels getrennt einzeln dem Gemisch zuzufügen.

Geringe Mengen flüssiger Anteile können dabei auf vorgelegte feste Anteile unter Bewegung aufgesprüht werden. Das die Tenside und Buildersubstanzen enthaltene Granulat kann in hergebrachter Weise durch Sprühtrocknung eines wäßrigen Slurries dieser Bestandteile hergestellt oder aber durch Agglomerationsgranulation der mehr oder weniger festen Bestandteile gewonnen werden. Ein besonders bevorzugtes Herstellverfahren für dieses Granulat ist die Granulation unter Druck, vorzugsweise in Extrudern zu endlosen Strängen, die dann mit Hilfe von Messern auf die gewünschte Korngröße geschnitten werden. Ein derartiges Verfahren wird eingehend in der europäischen Patentschrift 486 592 beschrieben, deren Offenbarungsgehalt insoweit auch zum Inhalt dieser Patentanmeldung gemacht wird. Ein Beispiel für die Herstellung von Tensidgranulaten in schnellaufenden Mischern ist in der internationalen Anmeldung WO 93/23523 zu finden. Vorzugsweise soll das Granulat aus Buildersubstanz, Tensid und gegebenenfalls weiteren Inhaltsstoffen des Waschmittels für sich genommen Schüttdichten von mehr als 500 g/l aufweisen, wobei eine praktische Obergrenze bei etwa 1400 g/l anzusetzen ist, die aber in Einzelfällen auch überschritten werden kann. Vorzugsweise soll die Schüttdichte dieses Granulats für sich allein im Bereich von 600 bis 1200 g/l und insbesondere im Bereich von 700 bis 1000 g/l liegen. Die mittlere Korngröße des Granulats soll vorzugsweise im Bereich von 0,8 bis 6 mm, besser noch zwischen 1 und 3 mm und besonders bevorzugt zwischen 1,2 und 2 mm liegen.

Die Prüfungen des dem Waschmittel eigenen Löseverhaltens kann unter Standardbedingungen nach folgendem Verfahren vorgenommen werden.

In einem Becherglas der hohen Form mit einem Fassungsvermögen von 2 Litern wird 1 Liter Leitungswasser mit 17 ° deutsche Härte (Calcium : Magnesium = 3 : 1), das auf 22 °C temperiert ist, vorgelegt. Während das Wasser mit einem Flügelrührer bei 700 U/min. gerührt wird, werden auf einmal 0,500 g des zu prüfenden Waschmittels zugesetzt und die Mischung weiter mit dieser Geschwindigkeit gerührt. Nach einer vorher festgesetzten Zeit wird der gesamte Inhalt des Becherglases durch ein Metallsieb mit einer Maschenweite von 0,1 mm abfiltriert. Das Sieb wird mit dem darauf befindlichen Rückstand bei 40 °C im Trockenschrank bis zur Massenkonstanz getrocknet. Aus der Gewichtsdifferenz des Siebes mit und ohne Rückstand ergibt sich die Menge des Rückstands und durch Differenzbildung die Menge des in der bestimmten Zeit gelösten Waschmittelanteils. Vom Filtrat werden mit einer Pipette dreimal je 200 ml abgenommen und jeweils mit 20 ml halbkonzentrierter Schwefelsäure angesäuert und dann mit 0,05 n KMnO₄ titriert. 1 ml 0,05 n KMnO₄ = 0,4 mg Aktivsauerstoff, entsprechend 13,1 mg Natriumpercarbonat (mit theoretischem AO-Gehalt von 15,3 %) pro Liter. Aus dem Ergebnis der Titration läßt sich die in der fraglichen Zeit gelöste Menge an Natriumpercarbonat ermitteln.

### Beispiele

1. Es wurde ein erfindungsgemäßes Waschmittel mit folgender Bruttozusammensetzung hergestellt:

| | |
|---|---|
| Natriumdodecylbenzolsulfonat | 8,2 Gew.-% |
| Fettalkoholethoxylat (C₁₂₋₁₈ + 7 EO) | 4,0 Gew.-% |
| Talgseife | 4,0 Gew.-% |
| Zeolith NaA | 30,5 Gew.-% |
| Acrylsäure-Maleinsäure-Copolymer (Na-Salz) | 4,7 Gew.-% |
| Na₂CO₃ | 5,2 Gew.-% |
| Wasserglas 3,5 | 3,0 Gew.-% |
| TAED-Granulat (91 %ig) | 6,2 Gew.-% |
| Hochalkalische Protease (Granulat) | 1,0 Gew.-% |
| Natriumpercarbonat (Granulat 87 %ig) | 15,0 Gew.-% |
| Rest Na₂SO₄, Hilfsstoffe, Wasser | zu 100 Gew.-% |

Die Herstellung erfolgte in der Weise, daß zunächst aus den Buildersubstanzen, den anionischen Tensiden und einem Teil des nichtionischen Tensids in einem Sprühtrocknungsverfahren ein Vorgemisch hergestellt wurde, das dann in einem Prozeß gemäß WO 93/23523 in einem Schugi-Mischer zusammen mit dem restlichen nichtionischen Tensid zu einem Granulat verarbeitet wurde. Die mittlere Teilchengröße dieses Granulats lag bei etwa 0,8 mm, sein Schüttgewicht bei 780 g/l. Dieses Granulat wurde dann in einem Freifallmischer mit den entsprechenden Mengen an granuliertem Enzym, granuliertem Bleichaktivator und granuliertem Percarbonat zum fertigen Waschmittel aufgemischt. Das Percarbonatgranulat war gemäß DE P 43 24 104.2 hergestellt und wies eine Umhüllung aus Natriumcarbonat, Natriumsilikat und Magnesiumsulfat auf. Sein Aktivsauerstoffgehalt betrug 13,5 Gew.-%. Das Schüttgewicht lag bei einer mittleren Teilchengröße von 0,7 mm bei 850 g/l.
Zum Vergleich wurde ein Waschmittel verwendet, das anstelle des vorstehend beschriebenen Percarbonatgranulats nicht umhülltes kristallines Natriumpercarbonat in äquivalenter Menge (bezogen auf Aktivsauerstoff) und Natriumsulfat zum Gewichtsausgleich enthielt.
**2. Prüfung des Löseverhaltens**
Die Prüfung des Löseverhaltens erfolgte unter den in der Beschreibung angegebenen Standardbedingungen mit einer Lösezeit von 1,0 Minuten. In einem Becherglas der hohen Form mit einem Fassungsvermögen von 2 Litern wurde 1,00 Liter Leitungswasser mit 17 °dH, das auf 22 °C temperiert war, vorgelegt. Während das Wasser mit einem Flügelrührer bei 700 U/min. gerührt wurde, wurden auf einmal jeweils 0,500 g des zu prüfenden Waschmittels zugesetzt und die Mischung weiter mit dieser Geschwindigkeit gerührt. Nach 60 s wurde der gesamte Inhalt des Becherglases durch ein Metallsieb mit einer Maschenweite von 0,1 mm abfiltriert. Das Sieb wurde mit dem darauf befindlichen Rückstand bei 40 °C im Trockenschrank bis zur Massenkonstanz getrocknet. Aus der Gewichtsdifferenz des Siebes mit und ohne Rückstand ergaben sich die Rückstandmengen und durch Differenzbildung die Mengen des in dieser Zeit gelösten Waschmittelanteils. Der Versuch wurde mit jedem Waschmittel dreimal durchgeführt und die Ergebnisse gemittelt. Von den jeweiligen Filtraten wurden mit einer Pipette dreimal je 200 ml abgenommen und jeweils mit 20 ml halbkonzentrierter Schwefelsäure angesäuert und dann mit 0,05 n KMnO₄ titriert. Die Titrationsergebnisse wurden gemittelt und zur Bestimmung der gelösten Menge an Natriumpercarbonat verwendet. Die folgende Tabelle 1 enthält die Ergebnisse.

**Tabelle 1**

| Waschmittel | gelöster Anteil (in Gew.-%) nach 2,0 Minuten | |
|---|---|---|
| | 2Na₂CO₃ x 3H₂O₂ | Waschmittel insgesamt |
| 1 | | |

| | | |
|---|---|---|
| mit umhülltem Natriumpercarbonat gemäß DE 43 24 104.2 | 45 | 90 |
| 2 | | |
| mit nicht umhülltem Natriumpercarbonat | 95 | 95 |

**3. Waschversuche:**
Mit den unter 1 und 2 beschriebenen Waschmitteln wurden in einer Miele-Waschmaschine W 760 im Einlaugenprogramm bei 30 und 40 °C Waschversuche unter folgenden Bedingungen durchgeführt:

| | |
|---|---|
| Wassermenge | 20 1 |
| Wasserhärte | 17° dh |
| Füllwäsche weiß | 3,5 kg |
| Testanschmutzungen (Läppchen 10 x 10 cm) | 7 x 3 Stück |
| Waschmittelmenge | 100 g |

Als künstliche Anschmutzungen wurden u.a. solche ausgewählt, die größere Mengen an eiweißhaltigen Bestandteilen enthielten. Die Auswertung erfolgte nach dem Trocknen der gewaschenen Proben durch Messung der Lichtremission bei 460 Nanometer gegen Bariumsulfat als Standard (100 % Remission). Aus den in den folgenden Tabellen 2 und 3 wiedergegebenen Ergebnissen wird deutlich, daß Waschmittel, die gemäß der Erfindung ein verzögert lösliches Natriumpercarbonat enthalten, in ihrem Waschvermögen gegenüber eiweißhaltigen Anschmutzungen ähnlichen Waschmitteln, die herkömmliches Natriumpercarbonat enthalten, deutlich überlegen sind. Eine Reduzierung der Bleichwirkung an bleichbaren Anschmutzungen ist dabei nicht zu beobachten.

**Tabelle 2**

| Waschversuche bei 30 °C | Remissionswerte mit Waschmittel | |
|---|---|---|
| Anschmutzung (auf Baumwolle) | 1 | 2 |
| Blut | 72 | 60 |
| Blut/Milch/Ruß | 48 | 43 |
| Blut/Milch/Tusche | 33 | 31 |
| Tee | 60 | 60 |
| Johannisbeere | 66 | 66 |
| Rotwein | 46 | 45 |
| Kaffee | 53 | 53 |

**Tabelle 3**

| Waschversuche bei 40 °C | Remission mit Waschmittel | |
|---|---|---|
| Anschmutzung (auf Baumwolle) | 1 | 2 |
| Blut | 75 | 49 |
| Blut/Milch/Ruß | 55 | 50 |
| Blut/Milch/Tusche | 36 | 33 |
| Tee | 63 | 64 |
| Johannisbeere | 64 | 65 |
| Rotwein | 51 | 52 |
| Kaffee | 61 | 61 |

## Patentansprüche

1. Waschmittel in streufähiger Form, das neben Tensid und Buildersubstanz wenigstens ein Enzym und Natriumpercarbonat enthält, dadurch gekennzeichnet, daß das Natriumpercarbonat in einer Form enthalten ist, die sich beim Auflösen in Wasser langsamer löst als das Waschmittel insgesamt, wobei das Natriumpercarbonat nicht mit einem ein Borat enthaltenden Beschichtungsmittel oder alleine mit Borsäure oder alleine mit Natriumsilikat oder alleine mit Magnesiumsulfat beschichtet ist.

2. Waschmittel nach Anspruch 1, bei dem unter Standardbedingungen nach 1,0 Minuten mehr als 80 Gew.-% des Waschmittels, aber weniger als 70 Gew.-% des Natriumpercarbonats in Lösung gehen.

3. Waschmittel nach Anspruch 1, bei dem unter Standardbedingungen nach 1,0 Minuten mehr als 80 Gew.-% des Waschmittels, aber weniger als 50 Gew.-%, vorzugsweise weniger als 30 Gew.-% des Natriumpercarbonats in Lösung gehen.

4. Waschmittel nach einem der Ansprüche 1 bis 3, das eine Protease, vorzugsweise eine hochalkalische Protease enthält.

5. Waschmittel nach einem der Ansprüche 1 bis 4, das 5 bis 50 Gew.-%, vorzugsweise 10 bis 40 Gew.-% und insbesondere 15 bis 25 Gew.-% an Natriumpercarbonat enthält.

6. Waschmittel nach einem der Ansprüche 1 bis 5, bei dem das Natriumpercarbonat in Form von Teilchen vorliegt, die durch Agglomerationsgranulation hergestellt und mit Hüllsubstanzen beschichtet sind.

7. Waschmittel nach Anspruch 6, bei dem die Agglomerationsgranulation oder das Beschichten der Natriumpercarbonatteilchen in der Wirbelschicht durchgeführt wurden.

8. Waschmittel nach einem der Ansprüche 6 oder 7, bei dem als Hüllsubstanzen Alkalicarbonat, Alkalisilikat und wenigstens ein Magnesiumsalz aus der Gruppe der Sulfate, Chloride und Carbonate in einer oder mehreren verschieden zusammengesetzten Schichten auf das Natriumpercarbonat aufgebracht sind.

9. Waschmittel nach Anspruch 8, bei dem 0,5 bis 25 Gew.-%, vorzugsweise 1 bis 15 Gew.-% an Hüllsubstanz, bezogen auf fertig beschichtetes Material, auf das Natriumpercarbonat aufgebracht sind.

10. Verwendung eines Waschmittels nach einem der Ansprüche 1 bis 9 zur Wäsche von Textilien, die Flecken aus eiweißhaltigem Schmutz, insbesondere Blutflecken aufweisen.

## Claims

1. A scatterable detergent containing at least one enzyme and sodium percarbonate in addition to surfactant and builder, characterized in that the sodium percarbonate is present in a form which, on dissolution in water, dissolves more slowly than the detergent as a whole, the sodium percarbonate not being coated with a borate-containing coating composition or solely with boric acid or solely with sodium silicate or solely with magnesium sulfate.

2. A detergent as claimed in claim 1, characterized in that more than 80% by weight of the detergent but less than 70% by weight of the sodium percarbonate dissolves after 1.0 minute under standard conditions.

3. A detergent as claimed in claim 1, characterized in that more than 80% by weight of the detergent but less than 50% by weight and preferably less than 30% by weight of the sodium percarbonate dissolves after 1.0 minute under standard conditions.

4. A detergent as claimed in any of claims 1 to 3, characterized in that it contains a protease, preferably a highly alkaline protease.

5. A detergent as claimed in any of claims 1 to 4, characterized in that it contains 5 to 50% by weight, preferably 10 to 40% by weight and more preferably 15 to 25% by weight of sodium percarbonate.

6. A detergent as claimed in any of claims 1 to 5, characterized in that the sodium percarbonate is present in the form of particles produced by agglomeration granulation and coated with shell-forming substances.

7. A detergent as claimed in claim 6, characterized in that the agglomeration granulation or the coating of the sodium percarbonate particles is carried out in a fluidized bed.

8. A detergent as claimed in claim 6 or 7, characterized in that alkali metal carbonate, alkali metal silicate and at least one magnesium salt from the group of sulfates, chlorides and carbonates are applied to the sodium percarbonate in one or more layers differing in their composition as shell-forming substances.

9. A detergent as claimed in claim 8, characterized in that 0.5 to 25% by weight and preferably 1 to 15% by weight of shell-forming substance, based on coated material, is applied to the sodium percarbonate.

10. The use of the detergent claimed in any of claims 1 to 9 for washing laundry soiled with protein-containing stains, more particularly blood stains.

## Revendications

1. Produit de lavage sous forme dispersable qui renferme à côté d'un agent tensioactif et d'une substance de structuration, au moins un enzyme et du percarbonate de sodium,
caractérisé en ce que
le percarbonate de sodium est contenu sous une forme qui se dissout plus lentement lors de la mise en solution dans l'eau que le produit de lavage tout entier, dans lequel le percarbonate de sodium n'est pas enrobé avec un agent de recouvrement contenant un borate ou tout seul avec l'acide borique ou tout seul avec le silicate de sodium ou tout seul avec du sulfate de sodium.

2. Produit de lavage selon la revendication 1,
dans lequel
dans des conditions standard après 1,0 minute, plus de 80 % en poids du produit de lavage mais cependant moins de 70 % en poids de percarbonate de sodium entrent en solution.

3. Produit de lavage selon la revendication 1,
dans lequel
dans des conditions standard après 1,0 minute plus de 80 % en poids du produit de lavage mais moins de 50 % en poids, de préférence moins de 30 % en poids de percarbonate de sodium entrent en solution.

4. Produit de lavage selon l'une des revendications 1 à 3, qui renferme une protéase de préférence une protéase hautement alcaline.

5. Produit de lavage selon l'une des revendications 1 à 4, qui renferme de 5 à 50 % en poids, de préférence de 10 à 40 % en poids et en particulier de 15 à 25 % en poids de percarbonate de sodium.

6. Produit de lavage selon l'une des revendications 1 à 5,
dans lequel
le percarbonate de sodium se présente sous forme de particules qui sont produites par granulation par agglomération et qui sont revêtues d'une substance d'enrobage.

7. Produit de lavage selon la revendication 6,
dans lequel
la granulation par agglomération ou le recouvrement des particules de percarbonate de sodium est effectué en lit fluidifié.

8. Produits de lavage selon l'une des revendications 6 ou 7,
dans lequel
comme substance d'enrobage on applique un carbonate de métal alcalin, un silicate de métal alcalin, et au moins un sel de magnésium choisi dans le groupe du sulfate, du chlorure de compositions différentes sur le percarbonate de sodium.

9. Produit de lavage selon la revendication 8,
dans lequel
on applique de 0,5 à 25 % en poids de préférence de 1 à 15 % en poids de substance d'enrobage rapporté au produit recouvert finalement, sur le percarbonate de sodium.

10. Utilisation d'un produit de lavage, selon une des revendications 1 à 9,
en vue du lavage d'articles textiles qui possèdent des taches de salissure contenant de l'albumine, en particulier des taches de sang.
